# EUROPÄISCHE PATENTANMELDUNG

(11) **EP 2 255 611 A1**
(43) Veröffentlichungstag der Anmeldung: **01.12.2010**
(21) Anmeldenummer: 10005337.0
(22) Anmeldetag: 21.05.2010
(51) Int. Cl.: A01F 15/04, B30B 9/30

(54) **Großballenpresse**

(30) Priorität: 30.05.2009 DE 202009007734 U
(71) Anmelder: Maschinenfabrik Bernard Krone GmbH, 48480 Spelle (DE)
(72) Erfinder: Keller, Alfons, 49497 Mettingen (DE)

(57) **Zusammenfassung**

Großballenpresse (1) zur Herstellung quaderförmiger Hochdruckballen, insbesondere landwirtschaftliche Erntegutballen, welche als selbstfahrende oder als von einer Zugmaschine gezogenen und angetriebenen Erntemaschine das Erntegut mittels einer Aufnahme- und Fördereinrichtung (6) aufnimmt und einem Presskanal (12) zuführt, in dem ein alternierend angetriebener linear geführter Presskolben (13) das Erntegut verdichtend zu einem Ballen formt, wobei betriebsbedingte Krafteinflüsse dabei derart auf den Presskolben (13) einwirken, dass der Presskolben (13) außerhalb seiner linearen Betriebsbewegungen zusätzliche Bewegungen innerhalb eines Führungsspiels der Linearführungen (17) ausführt, wobei zumindest ein zusätzliches Führungsmittel (23) derart auf den Presskolben (13) einwirkt, dass die zusätzlichen Bewegungen des Presskolbens (13) innerhalb des Führungsspiels der Linearführungen (17) wirksam unterbunden werden.

## Beschreibung

Die vorliegende Erfindung betrifft eine Großballenpresse zur Herstellung quaderförmiger Hochdruckballen mit den Merkmalen des Oberbegriffs des Anspruchs 1.

Eine derartige Ballenpresse ist beispielsweise durch die DE 36 07 657 A1 bekannt. Ein Presskolben wird in einem Presskanal auf einer annähernd horizontalen Bahn in Richtung der Maschinenlängsachse linear hin- und herbewegt. Dabei führt er Arbeits- und Rückhubbewegungen aus. Vorzugsweise wird der Presskolben dabei im Presskanal durch Laufrollen auf Führungsschienen an oder in den Presskanalwänden geführt. Bei der Arbeitshubbewegung wird durch den Presskolben Erntegut, welches durch eine Presskanaleinlassöffnung von unten in Fahrtrichtung gesehen hinter den Presskolben in den Presskanal gefördert wird, im Bereich der Einlassöffnung abgeschnitten und dann verdichtet. Dieses Erntegut wird gegen bereits im Presskanal befindliches Erntegut gepresst. Aus vielen Einzelschichten entsteht so ein Ballen, der abschließend mit mehreren Fäden umbunden wird. Der Antrieb solcher Pressen erfolgt zumeist durch eine Gelenkwellenverbindung vom Zugfahrzeug zur Presse. Über die Gelenkwelle wird eine Schwungscheibe in Rotation versetzt. Die Schwungscheibe ist vorzugsweise direkt der Eingangswelle eines vor dem Kolben angeordnetem Hauptgetriebes zugeordnet, welches eine beidseitig des Getriebes herausragende etwa horizontal und quer zur Fahrtrichtung ausgerichtete Abtriebswelle aufweist. Auf diesen herausragenden Enden sind Kurbelarme drehfest gehaltert. Schubstangen verbinden pleuelartig die freien Enden der Kurbelarme mit dem Presskolben. Durch diesen Kurbeltrieb linear angetrieben verdichtet der Presskolben der Presskammer zugeführtes Erntegut wenn er sich von vorne nach hinten bewegt, wobei die Schubstangen auf Druck belastet sind. Alternative Antriebe linear geführter Presskolben, beispielsweise durch hydraulische Kolben-Zylindereinheiten sind ebenfalls bekannt, haben sich in der Praxis jedoch nicht durchgesetzt.

Quaderförmige Hochdruckballen zeichnen sich gegenüber Rundballen durch die hohe gleichmäßige Festigkeit und durch die Form des Ballens aus, wodurch unter anderem besonders gute Transport- und Lagerverhältnisse gegeben sind. Bei der Pressenentwicklung spielt die Optimierung des Ballentransportes eine große Rolle, weil Erntegut zunehmend als Handelsware in Ballenform auch über große Entfernungen transportiert wird. Maximale Volumen- und Gewichtsausnutzung bei LKW Transporten bedingen möglichst hohe Pressdichten und größenoptimierte Ballenabmessungen. Entsprechende Pressen müssen erheblich gestiegenen Antriebsleistungen und Belastungen im Dauereinsatz standhalten, wobei auch insbesondere die Kolbenführung sehr großen Belastungen ausgesetzt ist. Eine spielfreie Führung ist an dieser Stelle mit wirtschaftlich vertretbarem Aufwand aufgrund von Fertigungstoleranzen nicht erreichbar. Durch die bauartbedingte Gutzuführung von unten in den Presskanal ist auch trotz aufwändiger technischer Lösungen nicht immer gewährleistet, dass der Kanal komplett mit einem gleichmäßigen Erntegutpaket befüllt wird, wodurch beim Verdichtungshub des Presskolbens dieser nicht gleichmäßig belastet wird.

Ein nicht vollständiges Erntegutpaket, welches in den Presskanal gefördert wird, verursacht im unteren Bereich des Presskanals eine Materialanhäufung, durch die der Presskolben beim Verdichtungshub im Rahmen seines Führungsspiels eine Kippbewegung um die Lagerachse des Kolbenantriebs wie beispielsweise die Schubstangen ausführt. Nach einer derartigen ungleichmäßigen Kanalbefüllung bedarf es mehrerer optimaler Befüllungen, um diese auszugleichen und eine gleichmäßige Kolbenbelastung wiederherzustellen. Beim Befüllen des Presskanals durch eine untere Einlassöffnung ragt in der Regel immer etwas Erntegut vom Presskanal in die Einlassöffnung, weshalb der Presskolben an seiner Unterseite Schneiden aufweist, die in Zusammenwirkung mit einer Gegenschneide an der Einlassöffnung dieses Material beim Arbeitshub abschneidet. Diese, ebenfalls im unteren Bereich auf den Presskolben wirkenden Schnittkräfte, die sich mit abnehmender Messerschärfe und bei nicht optimaler Einstellung des Schneidspaltes erheblich erhöhen können, bewirken zusätzlich die Kippneigung des Kolbens.

Bei Pressen, bei denen der Kolbenantrieb mittels eines Kurbeltriebs ausgeführt ist, ist eine geradlinige Krafteinwirkung im Schwerpunkt des Kolbens nicht erreichbar, wodurch insbesondere beim Arbeitshub bei auftretendem Gegendruck durch die schräge Krafteinleitung der Schubstangen ein Kippen des Kolbens im Bereich des Führungsspiels noch zusätzlich begünstigt wird.

Ein während des Arbeitshubs aus den zuvor genannten Gründen gekippter Kolben wird im Punkt der Richtungsumkehr wieder in seine Normallage zurückkippen, wodurch alle negativen Einflüsse auf die Führungselemente pro komplettem Hubdurchgang wiederholt auftreten.

Erhöhte Abnutzung der Laufrollen und der Führungsbahnen sowie Dellen in den Führungsschienen durch immer wiederkehrendes Kippen an gleicher Stelle führt zu immer größerem Spiel und immer schneller fortschreitendem Verschleiß. Vorgenannte Ursachen können zu einem Absacken des Presskolbens führen, wodurch sich der Schneidspalt zwischen dem kolbenseitigen und dem gestellseitigen Schneidmesser verringert und diese sogar aufeinanderschlagen und zerstört werden können, wobei die Folgeschäden sehr hoch wären. Weiterhin führen vorgenannte Ursachen bis hin zu blockierenden Laufrollen mit schwerwiegenden und teuren Folgeschäden wie beispielsweise auch Maschinenbrand durch sich erhitzende Laufrollen oder Funkenflug.

Aus dem Stand der Technik sind diverse Ausführungen und Lösungsvorschläge zur Verbesserung der Kolbenführung bekannt. So werden beispielsweise in der DE 27 30 869 C2 und in der DE 34 30 576 A1 verbesserte Kolbenführungen beschrieben. Diese Lösungen beruhen in erster Linie auf den Einsatz einer Vielzahl von Führungsrollen und auf die Ausnutzung extrem langer Führungsbahnen im Verhältnis zur Kolbenhöhe. Bei heutigen Großballenpressen mit den bereits oben erwähnten extrem vergrößerten Kanalabmessungen sind derartig vorteilhafte Führungslängen aus Platzgründen nicht realisierbar. Der Einsatz zusätzlicher fester Führungsrollen erfordert einen erheblichen Mehraufwand beim Justieren des Kolbens und Minimierung der Fertigungstoleranzen und damit Mehrkosten.

Durch die DE 103 30 502 A1 ist eine Ballenpresse mit einem durch Laufrollen auf Führungsschienen im Presskanal geführten Presskolben bekannt, welche eine Überwachungseinrichtung zur Erkennung von kritischen Zuständen der Presskolbenführung aufweist. Eine derartige Einrichtung ist sicherlich in der Lage, frühzeitig den Verschleiß von Laufrollen und Führungen des Presskolbens zu erfassen und dem Bediener anzuzeigen. Zur sicheren Überwachung aller Risikostellen und Faktoren ist jedoch ein erheblicher Aufwand an Sensorik sowie Auswerte- und Anzeigeeinrichtungen notwendig. Außerdem bedingen die extremen Einsatzbedingungen der Sensoren unter hohem Verschmutzungs- und Vibrationseinfluss extrem hohe Anforderungen an diese und einen zusätzlichen ständigen Pflege- und Wartungsaufwand zur Erhaltung der Funktionssicherheit.

Der Erfindung liegt die Aufgabe zugrunde, für eine Großballenpresse der Eingangs genannten Art Maßnahmen anzugeben, durch die ohne eine Verringerung der Fertigungstoleranzen die Kolbenführung des Presskolbens insbesondere bezüglich Laufruhe und Verschleiß und damit die Betriebssicherheit der Großballenpresse insgesamt erheblich verbessert wird.

Diese Aufgabe wird durch die im kennzeichnenden Teil des Anspruches 1 aufgeführten Merkmale gelöst. Hinsichtlich der weiteren Ausgestaltung der Erfindung wird auf die weiteren abhängigen Ansprüche verwiesen.

Die Großballenpresse nach der Erfindung weist einen über einen Kurbeltrieb linear in Längsrichtung der Maschine hin- und her bewegbaren Presskolben auf, der in etwa horizontalen Führungen geführt wird. Bei bekannten Pressen hat sich dabei eine Rollführung durch seitlich am Kolben angeordnete Kolbenrollen durchgesetzt, welche in Führungsbahnen bzw. auf Führungsleisten an bzw. in den Seitenwänden des Presskanals linear geführt werden. Zur genauen Ausrichtung der Führungen zueinander und zur Anpassung an den Kolben sind Justiermöglichkeiten beispielsweise durch Zwischenlagen oder Exenterverstellungen vorgesehen. Ebenfalls sind die Kolbenrollen üblicherweise zumindest teilweise auf Exenterachsen gelagert. All diese Einstell- und Anpassmaßnahmen sind notwendig um unvermeidbare Fertigungstoleranzen der sehr großen und komplexen Schweißbaugruppen des Maschinenrahmens und des Kolbens auszugleichen. Trotzdem ist es mit vertretbarem Aufwand nicht möglich die Führungen spielfrei auszuführen.

Gleitführungen, wie sie beispielsweise im Industriepressen-Bereich verbreitet sind, spielen im Bereich der Kolbenführung bei landwirtschaftlichen Großballenpressen unter anderem aufgrund der Umgebungseinflüsse und der Fertigungskosten keine Rolle.

Bei einer erfindungsgemäßen Großballenpresse wird durch zusätzliche Führungsmittel bewirkt, dass sich das Restspiel innerhalb der Kolbenführung nicht negativ auf die Laufruhe und auf den Verschleiß auswirkt. Das bei einer Kolbenpresse mit linear geführtem Kolben unvermeidbare Kippen des Kolbens im Toleranzbereich des Führungsspiels, hervorgerufen durch ungleichmäßige Befüllung des Presskanals, Schnittkräfte an der Kolbenunterseite und durch wechselweise schräg auf den Kolben einwirkende Antriebskräfte, wird durch die erfindungsgemäßen zusätzlichen Führungsmittel unterbunden.

Vorzugsweise sind die zusätzlichen Führungsmittel dabei als am Kolben angeordnete zusätzliche Führungsrollen ausgebildet, welche beweglich gelagert den Kolben kraftbetätigt derart in seiner Position verlagern, dass die insbesondere beim Presshub des Kolbens auftretende Kippbewegung desgleichen dadurch vorweggenommen wird. Die Kraftbetätigung der zusätzlichen Führungsmittel kann auf vielfältige Weise ausgeführt werden. Vorteilhaft, da konstruktiv besonders einfach, sind die zusätzlichen Führungsmittel beidseitig des Kolbens als an Schwenkhebeln gelagerte Führungsrollen ausgeführt, wobei die Schwenkhebel durch zumindest einen Kraftspeicher angetrieben, den Kolben in die zuvor beschriebene erfindungsgemäße Lage verbringen.

Ob der oder die Kraftspeicher durch einfache vorgespannte Spiralfedern oder durch fluidbetätigte Stellantriebe in Verbindung mit zumindest einem Druckspeicher ausgeführt sind, ist dabei unerheblich. Eine Einstellung der Vorspannkraft wäre in beiden Fällen mit einfachen Mitteln gegeben. In einer aufwändigeren Ausführungsform ist auch eine beispielsweise vom Pressdruck oder anderen Betriebsparametern der Presse abhängige Regelung der Vorspannkraft denkbar.

Somit wird das Kippen des Kolbens innerhalb des durch die Führungstoleranzen zugelassenen Führungsspiels wirkungsvoll unterbunden. Die im Normalfall schwerkraftbedingt auf den unteren Führungsbahnen aufliegenden Grundführungselemente des Presskolbens werden teilweise durch die erfindungsgemäße Lösung von diesen abgehoben und gegen die oberen Führungsbahnen zur Anlage gebracht. Damit ist der Kolben bereits im Leerlauf in die gekippte Lage verbracht, die er ohne Einwirkung durch die zusätzlichen Führungsmittel nach der Erfindung spätestens während des Druckanstiegs beim Presshub durch die zuvor beschriebenen Einflüsse schlagartig einnimmt. Durch die Vermeidung dieser schlagartigen Lageveränderung des Kolbens innerhalb des Führungsspiels wird eine erhebliche Verschleiß- und Geräuschminimierung der Großballenpresse erreicht. Somit wird durch die Erfindung eine zumindest bezüglich Lebensdauer und Betriebssicherheit erheblich verbesserte Großballenpresse bereitgestellt.

Durch die konstruktiv besonders einfache und in einer einfachen Ausführungsform in sich autarke Lösung der Erfindung ist sogar eine Nachrüstung und damit erhebliche Verbesserung und Wertsteigerung von älteren Pressen möglich.

Weitere Vorteile und Einzelheiten der Erfindung ergeben sich aus den Unteransprüchen und einem in der Zeichnung dargestellten Ausführungsbeispiel, das im Folgenden beschrieben wird.

In der Zeichnung zeigt:
- **Fig. 1**: eine gattungsgemäße Großballenpresse in Seitenansicht, wobei zur besseren Erkennbarkeit der erfindungsrelevanten Bauteile die Maschinen- verkleidungen entfernt sind;
- **Fig. 2**: eine schematische Detailansicht des Presskolbens einer erfindungsgemä- ßen Großballenpresse mit Antrieb und Führungen.

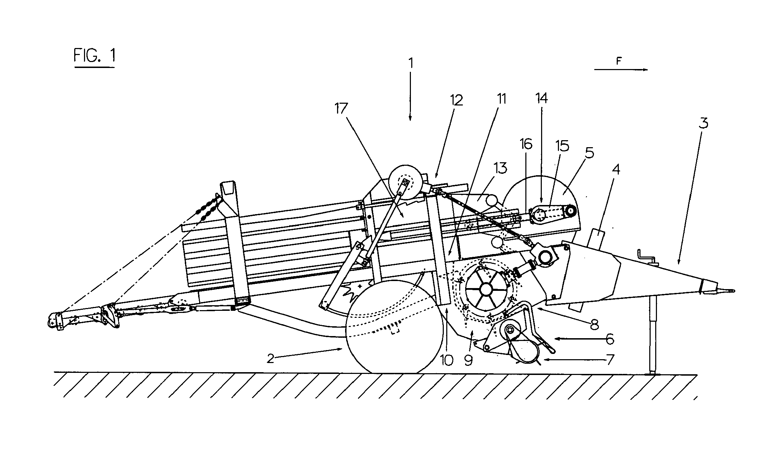

Figur 1 zeigt eine teils schematisch dargestellte gattungsgemäße landwirtschaftliche Großballenpresse 1, wobei zur besseren Erkennbarkeit der Bauteile die Maschinenverkleidungen entfernt sind. Die Ballenpresse 1 stützt sich auf Rädern 2 zum Erdboden hin ab und ist über eine Zugdeichsel 3 mit einer nicht dargestellten Zug- und Antriebsmaschine verbindbar, so dass sie im praktischen Einsatz in Fahrt- und Arbeitsrichtung F über eine Feld- oder Wiesenfläche bewegbar ist. Der Antrieb der Großballenpresse 1 erfolgt vom Zugfahrzeug über eine Gelenkwelle zu einem Schwungrad 4, welches in Rotation versetzt die Leistung direkt auf ein Hauptgetriebe 5 weiterleitet. Vom Hauptgetriebe 5 wird die Leistung verzweigt den verschiedenen Arbeitsorganen der Presse 1 zugeführt.

Zur Aufnahme des auf dem Erdboden zumeist in Schwaden liegenden Ernteguts ist die Großballenpresse 1 nach Figur 1 mit einer Aufnahmeeinrichtung 6 ausgerüstet, welche das aufgenommene Erntegut durch eine mit Zinken bestückte Trommel 7 aufnimmt und an eine Zuführeinrichtung 8 weiterleitet. Durch die Wirkung der als Rechenförderer 9 ausgebildeten Förderelemente der Zuführeinrichtung 8 wird das Erntegut in einem Zuführkanal 10 gesammelt und vorverdichtet und bei einem bestimmten Füllungsgrad durch eine Presskanaleinlassöffnung 11 von unten in einen Presskanal 12 der Ballenpresse 1 gefördert. Im Presskanal 12 wird in der dargestellten Ausführungsform ein Presskolben 13 auf einer geradlinigen Bahn hin- und her bewegt, um die von der Zuführeinrichtung 8 zugeführten Erntegutpakete zu festen Ballen zu verdichten.

Zur Erzeugung der hin- und her gehenden Bewegung des Presskolbens 13 im Presskanal 12 ist ein Kurbelantrieb 14 vorgesehen der im Hauptgetriebe 5 gelagert ist und von diesem aus angetrieben wird. Die beidseitig des Hauptgetriebes 5 rotierend angetriebenen Kurbelarme 15 des Kurbeltriebs sind endseitig über Schubstangen 16 mit dem Kolben 13 verbunden, wodurch dieser aufgrund seiner Lagerung in linearen Führungsbahnen 17 eine hin- und her gehende Bewegung in Längsrichtung der Maschine ausführt. Alternative Kolbenantriebe zu dem hier beschriebenen des Ausführungsbeispiels sind beispielsweise durch Hydraulikzylinder denkbar und auch bekannt, haben sich in der Praxis bei landwirtschaftlichen Kolbenpressen jedoch nicht durchgesetzt. Das der Aufgabenstellung zugrunde liegende Problem kann bei diesen Pressen jedoch ebenso auftreten, wobei diese Variationen ebenfalls im Rahmen der Erfindung liegen.

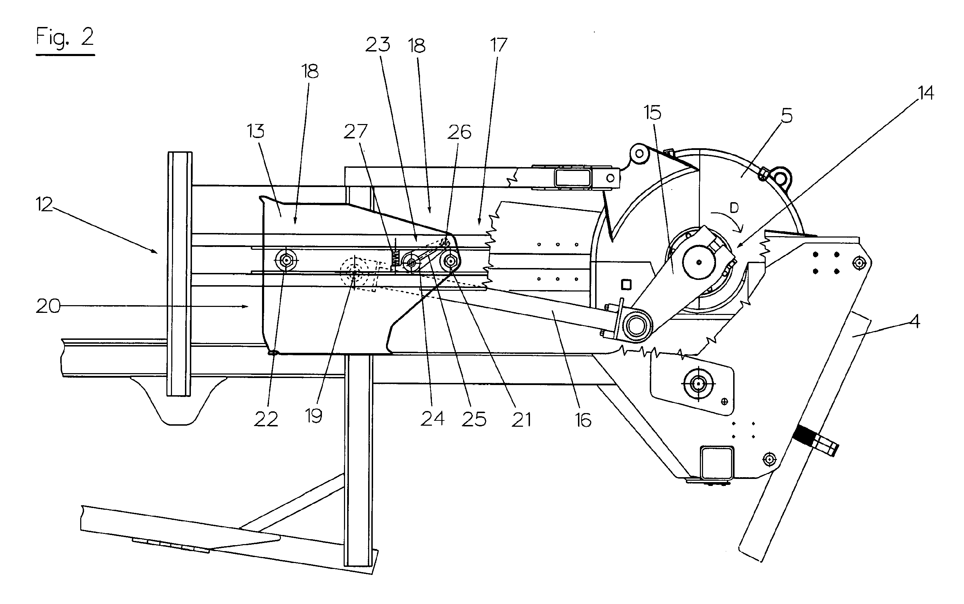

Die schematische Detailansicht eines Presskolbens 13 einer Großballenpresse 1 nach Fig. 1 in einer möglichen erfindungsgemäßen Ausführung ist in Fig. 2 dargestellt. Insbesondere der vom Hauptgetriebe 5 ausgehende Antrieb des Presskolbens 13 über die in Drehrichtung D umlaufenden Kurbelarme 15 und den Schubstangen 16 beidseits des Hauptgetriebes 5 ist hier deutlich zu erkennen. Der schematisch in Umrissen dargestellte Presskolben 13 wird bei seiner durch den Kurbelantrieb verursachten Hin- und Herbewegung linear durch Führungsrollen 18 beidseitig in Führungsbahnen 17 geführt. Die in diesem Ausführungsbeispiel vier Führungsrollen 18 sind dabei mit möglichst weitem Längsabstand zueinander und zur Anlenkachse 19 der Schubstangen 16 am Kolben 13 angeordnet, um so eine möglichst gute Momentabstützung des Kolbens 13 gegen die Führungsbahnen bei ungleichmäßiger Schneid- und Pressbelastung an dessen Stirnseite 20 beim Presshub zu gewährleisten.

Die insbesondere auf den unteren Bereich der Kolbenstirnseite 20 wirkenden Gegenkräfte, überwiegend hervorgerufen durch das Abschneiden des an der Presskanaleinlassöffnung 11 in den Zuführkanal 10 hineinragenden Ernteguts beim Presshub des Presskolbens 13, bewirken eine Kippbewegung des Presskolbens 13 um die Anlenkachse 19. Das schlagartige Abheben der hinteren Führungsrollen 21 von den unteren Laufbahnen der Führungsbahnen 17 und Anschlagen gegen die oberen Laufbahnen der Führungsbahnen 17 verursacht dabei nicht nur laute Betriebsgeräusche, sondern insbesondere auch Verschleiß an den Laufbahnen, welcher durch das sich ständig wiederholende Anschlagen im gleichen Laufbahnbereich sich schnell erhöhen kann und dadurch zu einer erheblichen Belastung insbesondere für die Laufrollen 21 wird. So wie beim Presshub die ungleichmäßig auf die Kolbenstirnseite 20 wirkenden Kräfte das Abheben der hinteren Führungsrollen 21 von der unteren Laufbahn und Anschlagen an die obere Laufbahn der Führungsbahnen 17 bewirken, so bewirkt der Wegfall dieser Gegenkräfte im Umkehrpunkt des Kolbens 13 vom Presshub zum Rückhub in die entgegengesetzte Richtung das Zurückkippen des Presskolbens 13 in seine Normallage mit einem Aufschlagen der hinteren Führungsrollen 21 auf die untere Laufbahn der Führungsbahnen 17 mit den gleichen beschriebenen Verschleißfolgen.

Um bereits die Ursache dieses speziellen partiellen Verschleißes der Führungsbahnen 17 mit den extremen Folgebelastungen der Führungsrollen 18, die zu deren Zerstörung mit erheblichen Folgeschäden führen können, zu vermeiden, ist der in Fig. 2 dargestellte Presskolben 13 des Ausführungsbeispiels einer erfindungsgemäßen Großballenpresse 1 mit zusätzlichen kraftbetätigten Führungselementen 23 ausgestattet, die den Presskolben 13 ständig in die gekippte Stellung, mit Anlage der hinteren Führungsrollen 21 an die oberen Laufbahnen der Führungsbahnen 17 verlagern, in die er ansonsten schlagartig durch ungleichmäßige Gegenkräfte auf die Kolbenstirnseite 20 verlagert wird. Somit wird das wechselweise Anschlagen insbesondere der hinteren Führungsrollen 21 und die damit verbundenen Verschleißerscheinungen und Folgeschäden erfindungsgemäß wirkungsvoll unterbunden.

Im gezeigtem Ausführungsbeispiel sind die zusätzlichen Führungselemente 23 beidseitig des Presskolbens 13 vorteilhaft möglichst nahe den hinteren Führungsrollen 21 angeordnet, wodurch die Betätigungskräfte gering gehalten werden können. Eine Anordnung an anderer Stelle, auch nur eines zusätzlichen Führungselementes 23, welches gleiches bewirkt, ist aber ebenso denkbar. Ebenfalls ist in einer weiteren Ausführungsform das Zusammenwirken zumindest eines zusätzlichen Führungselementes 23 mit zumindest einer separaten zusätzlichen Führungsbahn denkbar, um den beschriebenen erfindungsgemäßen Kippeffekt des Presskolbens 13 zu erzielen. Die vorteilhafte Ausführung der zusätzlichen Führungselemente 23 des Ausführungsbeispiels mit Stützrollen 24 könnten in einer weiteren Ausführungsform auch Gleitelemente zur Abstützung aufweisen.

Das in Fig. 2 dargestellte zusätzliche Führungselement 23 der rechten Maschinenseite ist mit einem Hebelarm 25 am Presskolben 13 im Lagerpunkt 26 drehgelagert. An dem, dem Lagerpunkt 26 gegenüber liegendem Ende des Hebelarms 25, ist die Stützrolle 24 gelagert. Diese wird durch eine zwischen dem Kolben 13 und dem stützrollenseitigem Ende des Hebelarms 25 wirkenden Kraftspeicher 27, hier in Form einer Druckfeder, derart stark auf die untere Laufbahn der Führungsbahn 17 gedrückt, dass dadurch der Presskolben 13 eine Kippbewegung ausführt, wobei die hinteren Führungsrollen 21 von den unteren Laufbahnen der Führungsbahnen 17 abheben und sich an die oberen Laufbahnen der Führungsbahnen 17 anlegen. Diese Bewegung findet im Bereich des Führungsspiels statt, welches die Führungsrollen 18 innerhalb der Führungsbahnen 17 haben. Die Kraftbetätigung des Hebelarms 25 ist in anderen Ausführungsformen auch als hydraulischer Kraftspeicher oder aber in einer besonders komfortablen Ausführung beispielsweise über einen kraftgeregelten Antrieb denkbar. Ein geregelter Antrieb könnte zur Schonung aller Führungselemente unter anderem im Verhältnis zu Erntegutparametern oder vorgegebenen Presskräften immer nur soviel Kraft auf die Stützrollen ausüben, wie unter den gegebenen Bedingungen notwendig ist um die betriebsbedingte Kippbewegung des Kolbens zu unterbinden.

Bei der besonders einfachen und damit kostengünstigen Lösung des Ausführungsbeispiels ist eine manuelle Einstellung durch Veränderung der Vorspannkraft der Druckfeder 27 aber ebenfalls vorteilhaft möglich.

## Patentansprüche

1. Großballenpresse (1) zur Herstellung quaderförmiger Hochdruckballen, insbesondere landwirtschaftliche Erntegutballen, welche als selbstfahrende oder als von einer Zugmaschine gezogenen und angetriebenen Erntemaschine das Erntegut mittels einer Aufnahme- und Fördereinrichtung (6) aufnimmt und einem Presskanal (12) zuführt, in dem ein alternierend angetriebener linear geführter Presskolben (13) das Erntegut verdichtend zu einem Ballen formt, wobei betriebsbedingte Krafteinflüsse dabei derart auf den Presskolben (13) einwirken, dass der Presskolben (13) außerhalb seiner linearen Betriebsbewegungen zusätzliche Bewegungen innerhalb eines Führungsspiels der Linearführungen (17) ausführt, **dadurch gekennzeichnet, dass** zumindest ein zusätzliches Führungsmittel (23) derart auf den Presskolben (13) einwirkt, dass die zusätzlichen Bewegungen des Presskolbens (13) innerhalb des Führungsspiels der Linearführungen (17) wirksam unterbunden werden.

2. Großballenpresse (1) zur Herstellung quaderförmiger Hochdruckballen nach Anspruch 1, **dadurch gekennzeichnet, dass** das zumindest eine zusätzliche Führungsmittel (23) des Presskolbens (13) kraftbetätigt auf den Presskolben (13) einwirkt.

3. Großballenpresse (1) zur Herstellung quaderförmiger Hochdruckballen nach mindestens einem der vorhergehenden Ansprüche, **dadurch gekennzeichnet, dass** das zumindest eine zusätzliche Führungsmittel (23) des Presskolbens (13) derart kraftbetätigt auf den Presskolben (13) einwirkt, dass dieser **dadurch** seine Lage verändert.

4. Großballenpresse (1) zur Herstellung quaderförmiger Hochdruckballen nach mindestens einem der vorhergehenden Ansprüche, **dadurch gekennzeichnet, dass** das zumindest eine zusätzliche Führungsmittel (23) des Presskolbens (13) kraftbetätigt derart auf den Presskolben (13) einwirkt, dass die Führungselemente (21) des Presskolbens (13) von einer schwerkraftbedingten Anlage an mit den jeweiligen Führungselementen (21, 22) zusammenwirkenden unteren Führungsbahnen der Linearführungen (17) abheben und gegen obere Führungsbahnen der Linearführungen (17) zur Anlage kommen.

5. Großballenpresse (1) zur Herstellung quaderförmiger Hochdruckballen nach mindestens einem der vorhergehenden Ansprüche, **dadurch gekennzeichnet, dass** das zumindest eine zusätzliche Führungsmittel (23) des Presskolbens (13) durch einen Kraftspeicher (27) angetrieben auf den Presskolben einwirkt.

6. Großballenpresse (1) zur Herstellung quaderförmiger Hochdruckballen nach Anspruch 5, **dadurch gekennzeichnet, dass** der Kraftspeicher (27) zumindest eine Spiralfeder umfasst.

7. Großballenpresse (1) zur Herstellung quaderförmiger Hochdruckballen nach Anspruch 5, **dadurch gekennzeichnet, dass** der Kraftspeicher (27) zumindest einen hydraulischen Druckspeicher umfasst.

8. Großballenpresse (1) zur Herstellung quaderförmiger Hochdruckballen nach mindestens einem der vorhergehenden Ansprüche, **dadurch gekennzeichnet, dass** das zumindest eine zusätzliche Führungsmittel (23) des Presskolbens (13) kraftbetätigt auf den Presskolben (13) einwirkt, wobei die Betätigungskraft manuell einstellbar ist.

9. Großballenpresse (1) zur Herstellung quaderförmiger Hochdruckballen nach mindestens einem der Ansprüche 1 bis 7, **dadurch gekennzeichnet, dass** das zumindest eine zusätzliche Führungsmittel (23) des Presskolbens (13) mit einer von den Betriebsbedingungen der Großballenpresse (1) abhängigen Betätigungskraft auf den Presskolben (13) einwirkt.

10. Großballenpresse (1) zur Herstellung quaderförmiger Hochdruckballen nach Anspruch 9, **dadurch gekennzeichnet, dass** das zumindest eine zusätzliche Führungsmittel (23) des Presskolbens (13) mit einer von den Betriebsbedingungen der Großballenpresse (1) und/oder Erntegutparametern abhängigen, durch eine Steuereinrichtung automatisch geregelten Betätigungskraft auf den Presskolben (13) einwirkt.
